Europäisches Patentamt

European Patent Office

Office européen des brevets

(11) Veröffentlichungsnummer : **0 167 791**
B1

# (12) EUROPÄISCHE PATENTSCHRIFT

(45) Veröffentlichungstag der Patentschrift :
09.11.88

(51) Int. Cl.⁴ : **F 02 F  3/00**, F 16 J   1/08

(21) Anmeldenummer : 85106757.9

(22) Anmeldetag : 31.05.85

(54) Tauchkolben für Verbrennungsmotoren.

(30) Priorität : 09.07.84 DE 3425203

(43) Veröffentlichungstag der Anmeldung :
15.01.86 Patentblatt 86/03

(45) Bekanntmachung, des Hinweises auf die Patenterteilung : 09.11.88 Patentblatt 88/45

(84) Benannte Vertragsstaaten :
FR GB

(56) Entgegenhaltungen :
EP-A- 0 141 071
DE-C-   247 925
DE-C-   928 611
FR-A-   797 898
GB-A-   153 493
GB-A-   191 181

(73) Patentinhaber : MAHLE GMBH
Pragstrasse 26-46 Postfach 50 07 69
D-7000 Stuttgart 50 (DE)

(72) Erfinder : Jüngling, Kurt
Wettenhartstrasse 8/I
D-7302 Ostfildern 2 (DE)

## Beschreibung

Die Erfindung betrifft einen Tauchkolben für Verbrennungsmotoren nach dem Oberbegriff des Anspruchs 1. Dabei bezieht sie sich speziell auf Kolben für große Motoren, bei denen die Kolbendurchmesser größer als 160 mm sind.

Ein solcher Kolben ist bereits aus DE-C 928 611 bekannt.

Der Grund für die streifenförmigen Zurücksetzungen im Bereich der Nabenbohrungen ist ein zweifacher. Zum einen dienen diese Zurücksetzungen dazu, daß das vom Ölabstreifring von einem Vordringen in die Ringpartie abgehaltene Öl nach unten abgeführt werden kann. Denn insbesondere in den Bereichen oberhalb der Nabenbohrungen können bei Großkolben in der Regel aus Festigkeitsgründen keine in der Nähe des Ölabstreifringes liegende in das Kolbeninnere führenden Ölrücklaufbohrungen angebracht werden. Der zweite Grund besteht darin, daß der Kolben in diesen Bereichen gegen ein durch eine Schaftverformung, z. B. Ovalisierung durch mechanische Kräfte, verursachtes Anlaufen seines Schaftes an die Zylinderlauffläche geschützt werden soll. Insbesondere bei einer Auslegung der Zurücksetzung zur sicheren Vermeidung eines Anlaufens kann die Ausnehmung eine Größe erreichen, die dazu führt, daß in diesem Bereich das Schmieröl nicht nur abgeführt werden kann, sondern umgekehrt auch von unten in erheblich vergrößerter Menge an den Ölabstreifring gelangt. Hierdurch kommt es dann zu erhöhtem Ölverbrauch durch verstärkten Übertritt von Schmieröl über den Ölabstreifring hinaus.

Dieses Problem läßt sich zum Teil durch eine Verbesserung der Abstreifwirkung der Ölringe lösen. Dennoch verbleibt letztendlich noch ein erhöhter Ölverbrauch.

In der älteren nicht vorveröffentlichten Patentanmeldung EP-A 0 141 071 ist bei den gattungsgemäßen Kolben auch schon beschrieben, an den unteren Bereichen der in Druck-Gegendruckrichtung liegenden Kolbenschaft-Tragflächen axiale zum Schaftende hin offene Ausnehmungen vorzusehen. Die zur Zylinderwand weisenden Kanten der Ausnehmungen sind dabei jedoch so ausgebildet, daß dort im Abwärtshub des Kolbens Schmieröl keilförmig zwischen Zylinderwand und Rand der Ausnehmung eingefangen wird. Dadurch bewirkt jene Maßnahme kein teilweises Fernhalten des Schmieröles von Bereichen des Kolbenschaftes, so daß auf diese Weise eine Erniedrigung des Ölverbrauches nicht erzielbar ist.

Die Herbeiführung einer solchen Ölverbrauchserniedrigung ist somit Aufgabe der vorliegenden Erfindung.

Gelöst wird diese durch eine Ausbildung des Kolbenschaftes nach den kennzeichnenden Merkmalen des Patentanspruchs 1.

Die starke Ablenkung des Öles in das Innere des Kolbens hinein ermöglicht besonders die Neigung der oberen Begrenzungsfläche der Ausnehmungen in einem Winkel alpha zwischen mindestens 90 Grad und maximal 150 Grad gerechnet gegenüber der Schaftoberfläche. Für eine gute ablenkende Wirkung ist es günstig, den unteren Wert dieses Winkels bereits mit 105 Grad anzusetzen.

Besonders wirksam sind diese Maßnahmen bei Kolben mit relativ großen Durchmessern, etwa ab 160 mm, wie sie in großen Motoren eingesetzt werden.

Das Vorsehen der erfindungsgemäßen Aussparungen am unteren Ende der Tragflächenbereiche des Kolbenschaftes beruht auf der Überlegung, daß das an den Kolben gelangende Schmieröl durch die Kurbelwelle aus dem Kurbelraum hauptsächlich im Bereich der Kolbenkippebene an den Zylinder und das Schaftende des Kolbens herangetragen wird. Bei der Abwärtsbewegung des Kolbens entsteht daher besonders in diesem Bereich am unteren Ende des Kolbenschaftes eine verstärkte Ölansammlung. Man kann sich dies so vorstellen, daß dieses Öl in der Art einer « Bugwelle » vor dem unteren Schaftende verdrängt wird. Bei dem sich abwärtsbewegenden Kolben sorgen die Trägheitskräfte des Öles dabei dafür, daß sich das Öl längs des Umfanges des Schaftendes verteilt. Dadurch gelangt in erheblichem Maße Öl in die seitlich im Bereich der Nabenbohrungen streifenförmig zurückgesetzten Schaftbereiche. Durch den im Vergleich zu den tragenden Schaftflächen relativ großen Abstand zur Zylinderwand kann das Öl dort in relativ großer Menge ungehindert an den Ölabstreifring gelangen. Die Ausnehmung am Schaftende im Bereich der tragenden Schaftfläche soll dafür sorgen, daß das in diesem Bereich von unten an den Kolben gelangende Öl bevorzugt in das Kolbeninnere gelenkt wird. Dies hat wiederum zur Folge, daß dieses Öl nicht in Umfangsrichtung am Ende des Schaftes in die zurückgesetzten Seitenbereiche unterhalb der Nabenbohrungen gelangen kann. Auf diese Weise kann der an den zurückgesetzten Schaftbereichen bis an den Ölabstreifring herantragende Ölfluß stark vermindert werden.

In der Regel sind bei Großkolben, die nicht mehr ohne Hilfsgeräte von Hand transportiert werden können, am Schaftende Fasen oder Eindrehungen vorgesehen. Diese haben hauptsächlich den Zweck, die an der Zylinderlaufbahn angrenzende untere Schaftkante vor Beschädigungen beim Transport oder der Montage des Kolbens zu schützen. Für den Fall, daß Kolben derartige Fasen oder Eindrehungen besitzen, müssen die erfindungsgemäßen Ausnehmungen axial höher sein, als diese Fasen bzw. Eindrehungen. Denn nur so kann erreicht werden, daß das im Motorbetrieb an den Ausnehmungen anstehende Öl nicht innerhalb dieser Fasen oder Eindrehungen umfangsmäßig in die seitlich zurückgesetzten Schaftbereiche im Bereich der Nabenbohrungen ungehindert gelangen kann.

Zweckmäßigerweise sollte die Ausnehmung daher in axialer Richtung mindestens 50 % höher sein als solche Fasen oder Eindrehungen am Schaftende.

Die axiale Höhe bei der Ausnehmung ist im übrigen im Prinzip an sich frei wählbar. Sie sollte jedoch höher als 5 % der Länge des Kolbenschaftes zwischen Bolzenachse und Schaftende sein.

Ein Ausführungsbeispiel der Erfindung ist in der Zeichnung dargestellt. Es zeigen

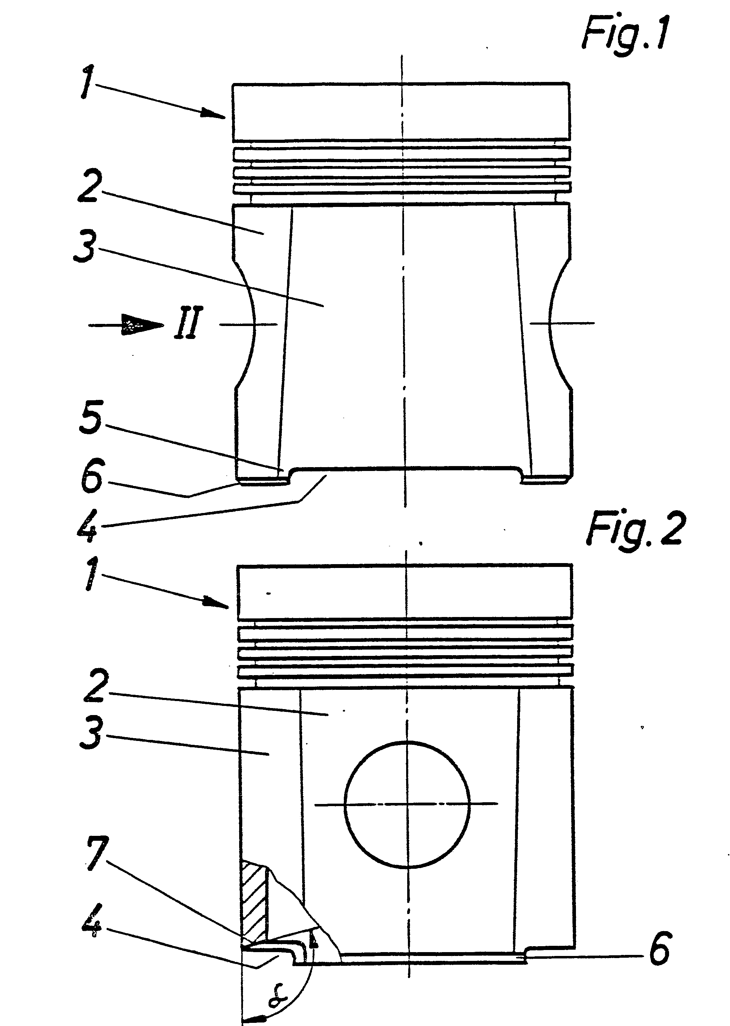

Fig. 1 eine Ansicht des erfindungsgemäßen Kolbens

Fig. 2 eine Ansicht des Kolbens in Richtung II nach Fig. 1.

Der aus Aluminium bestehende Kolben 1 weist einen Durchmesser von 300 mm auf. Die zurückgesetzten seitlichen Streifen 2 können z. B. dadurch hergestellt werden, daß der Kolben in seiner Längsachse exzentrisch auf einer Drehbank eingespannt bearbeitet wird. Auf diese Weise ist der Kolbenschaft jeweils in der durch die Kolbenlängsachse und die Bolzenachse gehenden Ebene am stärksten zurückgesetzt. Zum Rand der Streifen 2 hin nimmt diese Zurücksetzung sodann kontinuierlich ab, bis der Durchmesser der tragenden Schaftbereiche erreicht ist. Jeder der tragenden Schaftbereiche 3 erstreckt sich umfangsmäßig etwa 80° symmetrisch zur Kolbenkippebene, d. h. auf jeder Seite der Kolbenkippebene erstreckt sich dieser Teil um 40°.

Die erfindungsgemäßen Ausnehmungen 4 erstrecken sich umfangsmäßig nahezu über den gesamten Tragflächenbereich und lassen lediglich in Form seitlicher Stege 5 eine Grenze zu den seitlichen zurückgesetzten Streifen 2 verbleiben.

Als Schutz gegen Beschädigung der unteren an die Zylinderlauffläche angrenzenden Schaftkante ist der Kolben 1 an seinem Schaftende mit einer umlaufenden Fase 6 versehen. Die Höhe einer solchen Fase beträgt z. B. 5 mm. In diesem Fall wird die erfindungsgemäße Ausnehmung 4 mit einer axialen Höhe von 8 mm gewählt.

Die die obere Begrenzung der Ausnehmung 4 bildende Ringsegmentfläche 7 weist gegenüber der Zylinderlaufbahn einen Winkel $\alpha = 105°$ auf. Durch die Neigung dieser Fläche kann das am unteren Schaftende abgestreifte Öl besonders gut in das Innere des Kolbens hineingelangen.

## Patentansprüche

1. Tauchkolben für Verbrennungsmotoren mit geschlossenem im wesentlichen zylindrischen oder im Querschnitt außen ovalen Schaft, wobei bei dem ovalen Schaft die Hauptsache des Ovals senkrecht zur Bolzenachse verläuft und bei dem je ein eine der Nabenbohrungen umgreifender vertikaler Streifen (2) geringfügig aus der Schaftoberfläche zurückgesetzt ist, wobei die maximale Breite dieser Streifen (2) durch die Auslegung der Tragflächenbereiche (3) des Kolbens festgelegt ist, dadurch gekennzeichnet, daß in den Tragflächenbereichen (3) am unteren Schaftende auf der Druck- und Gegendruckseite je eine zum Schaftende offene Ausnehmung (4), die auch aus mehreren nebeneinanderliegenden Einzelausnehmungen bestehen kann, vorgesehen ist, deren Umfangslänge derjenigen des betreffenden Tragflächenbereiches (3) abzüglich jeweils an der Grenze zu den zurückgesetzten Streifen (2) verbleibender Tragflächen-Steg (5) -breiten entspricht und daß die axiale an die tragenden Schaftbereiche (3) angrenzende Begrenzungsfläche der Ausnehmungen (4) in einem Winkel alpha von mindestens 90 Grad und maximal 150 Grad, gerechnet von der Schaftoberfläche, in die Schaftoberfläche einmündet.

2. Tauchkolben nach Anspruch 1, dadurch gekennzeichnet, daß der untere Grenzwert des Winkels mindestens 105 Grad beträgt.

3. Tauchkolben nach Anspruch 1 oder 2 mit einem Kolbendurchmesser von größer als 160 mm.

4. Tauchkolben nach einem der vorhergehenden Ansprüche, dadurch gekennzeichnet, daß er am Schaftende mit einer Fase oder Einrichtung (6) versehen ist und daß die Ausnehmungen (4) axial höher sind als diese Fase bzw. Eindrehung.

5. Tauchkolben nach Anspruch 4, dadurch gekennzeichnet, daß die Ausnehmungen (4) axial mindestens 50 % höher sind als die Fase bzw. Eindrehung (6).

6. Tauchkolben nach einem der vorhergehenden Ansprüche, dadurch gekennzeichnet, daß die axiale Höhe der Ausnehmungen (4) 5 % der Länge des Kolbenschaftes zwischen Bolzenachse und Schaftende nicht überschreitet.

## Claims

1. Plunger piston for internal combustion engines and having a closed substantially cylindrical or cross-sectionally externally oval shank, the main axis of the oval in the oval shank extending at a right angle to the gudgeon pin axis, a vertical strip (2) engaging around one of the boss bores being set back slightly from the surface of the shank, the maximum width of these strips (2) being established by the design of the bearing surface portions (3) of the piston, characterised in that there is provided in the bearing surface zones (3), at the bottom shank end, on the pressure and counter-pressure side a recess (4) open towards the shank end and which may consist of a plurality of adjacently disposed individual recesses, of which the peripheral length corresponds to that of the relevant bearing surface portion (3) minus the widths of any bearing surface web (5) which may be left at the boundary with the set back strips (2) and in that the axial bounding surface of the recesses (4) axially adjacent the bearing portions (3) of the shank open out into the shank surface at an angle alpha of at least 90° and of a maximum 150°, calculated from the surface of the shank.

2. Plunger piston according to Claim 1, characterised in that the bottom limit value of the angle is at least 105°.

3. Plunger piston according to Claim 1 or 2, with a piston diameter which is greater than 160°.

4. Plunger piston according to one of the preceding Claims, characterised in that it is provided at the shank end with a bezel or a turned groove (6) and in that the recesses (4) are higher than the said bezel or turned groove.

5. Plunger piston according to Claim 4, characterised in that the recesses (4) are axially at least 50 % higher than the bezel or turned groove (6).

6. Plunger piston according to one of the preceding Claims, characterised in that the axial height of the recesses (4) does not exceed 5 % of the length of the piston shank between gudgeon pin axis and shank end.

## Revendications

1. Piston plongeur pour moteur à combustion interne à jupe fermée sensiblement cylindrique ou à section droite ovale, le grand axe de cet ovale étant perpendiculaire à l'axe du tourillon, et dans lequel chacune des bandes verticales (2) adjacentes aux alésages des moyeux est légèrement en retrait de la surface extérieure de cette jupe, la largeur maximale de ces bandes (2) étant déterminée par les dimensions des surfaces (3) d'appui du piston, piston caractérisé en ce qu'il est formé, dans les surfaces (3) d'appui et à l'extrémité inférieure de la jupe, des côtés action et réaction, respectivement, une encoche (4), qui peut être composée de plusieurs encoches individuelles adjacentes, qui débouche sur cette extrémité de la jupe et dont la longueur dans le sens de la périphérie, correspond à celle de la surface (3) d'appui intéressée, diminuée de la largeur de barrettes (5) de cette surface d'appui qui subsistent à la limite entre ladite surface d'appui et les bandes (2) en retrait et en ce que le flanc qui limite axialement les encoches (4) débouche sur la surface de la jupe en faisant avec cette surface un angle alpha d'au moins 90° et d'au plus 150°.

2. Piston selon la revendication 1, caractérisé en ce que la valeur limite inférieure de l'angle est égale à au moins 105°.

3. Piston selon la revendication 1 ou 2, dont le diamètre est supérieur à 160 mm.

4. Piston selon l'une des revendications précédentes, caractérisé en ce qu'il comporte à l'extrémité de la jupe un chanfrein ou une gorge (6) et en ce que les encoches (4) sont plus hautes axialement que ce chanfrein ou gorge.

5. Piston selon la revendication 4, caractérisé en ce que les encoches (4) sont plus hautes axialement d'au moins 50 % que le chanfrein ou gorge (6).

6. Piston selon l'une des revendications précédentes, caractérisé en ce que la hauteur axiale des encoches (4) n'est pas supérieure à 5 % de la longueur de la jupe entre son extrémité et l'axe du tourillon.

Fig.1

Fig.2